# EUROPÄISCHE PATENTSCHRIFT

(11) **EP 1 113 725 B1**
(45) Veröffentlichungstag und Bekanntmachung des Hinweises auf die Patenterteilung: **02.05.2003**
(21) Anmeldenummer: 99947364.8
(22) Anmeldetag: 16.09.1999
(51) Int. Cl.: A23L 1/22, A23F 3/40, A23L 1/40, A23L 1/39, A23L 2/56, A23G 3/00, A21D 13/08, C11D 3/50, C11B 9/00

(54) **EINGEKAPSELTE RIECHSTOFFE UND/ODER AROMEN MIT SPEZIELLEM FREISETZUNGSVERHALTEN**
ENCAPSULATED ODIFEROUS SUBSTANCES AND/OR AROMAS WITH SPECIAL RELEASING CHARACTERISTICS
AROMES OU AGENTS ODORIFERANTS AYANT DES CARACTERISTIQUES DE LIBERATION SPECIALES

(30) Priorität: 18.09.1998 DE 19842919; 07.09.1999 DE 19942581
(43) Veröffentlichungstag der Anmeldung: 11.07.2001
(73) Patentinhaber: HAARMANN & REIMER GMBH, 37601 Holzminden (DE)
(72) Erfinder: MOTHES, Helmut, D-51371 Leverkusen (DE); SCHLEIFENBAUM, Birgit, D-37671 Höxter (DE); HINDERER, Jürgen, D-51381 Leverkusen (DE)
(74) Vertreter: Mann, Volker, Dr.
(86) Internationale Anmeldenummer: EP9906849
(87) Internationale Veröffentlichungsnummer: WO00016643

(56) Entgegenhaltungen:
- EP-A- 0 067 595
- EP-A- 0 170 752
- EP-A- 0 272 220
- EP-A- 0 453 397
- EP-A- 0 937 496
- WO-A-92/11084
- WO-A-97/13416
- WO-A-97/16078
- WO-A-98/27151
- WO-A-98/49910
- US-A- 4 464 271
- O'CARROLL, P: "ENCAPSULATION" WORLD OF INGREDIENTS,1996, Seiten 36-37, XP000869959 ARNHEM, NL
- HENDERSON A: "CELLULOSE ETHERS - THE ROLE OF THERMAL GELATION" GUMS AND STABILISERS SYMPOSIUM,XX,XX, Seite 265-275 XP000602971

## Beschreibung

Die vorliegende Erfindung betrifft eingekapselte Aromen und/oder Riechstoffe sowie Verfahren zu deren Herstellung.

Bei Aromen (Geschmacksstoffen) und Riechstoffen handelt es sich um komplexe flüssige Mischungen flüchtiger Komponenten. Bei der Herstellung und Zubereitung von aromatisierten Lebensmitteln und parfümierten Produkten besteht die Notwendigkeit zur Steuerung der Freisetzung von Aromen oder Riechstoffen, um Verluste zu vermeiden.

Besonders bei wasserhaltigen Lebensmitteln, die hoch erhitzt werden, ist der Schutz des Aromas eine technologische Herausforderung. Hier kommt es zu deutlichen Aromaverlusten aufgrund der Flüchtigkeit der Aromakomponenten beim Erwärmen. Zudem können bei Aromenkompositionen durch die unterschiedlichen Verlustraten der einzelnen Komponenten Aroma-Profilverschiebungen auftreten. Der Übergang des Aromas in die Flüssigkeit während der Hochtemperaturphase in einem Lebensmittel-Verarbeitungsprozess muss daher vermieden werden. Hierzu bietet sich die Einkapselung des Aromas an. Diese Aromakapsel sollte sich dann idealerweise während der Abkühlphase kontrolliert auflösen und damit auch das Aroma kontrolliert freisetzen.

Das Aufbringen von Überzügen auf Partikel zur Einstellung des Löslichkeits- bzw. Freisetzungsverhaltens und zum Schutz eingekapselter Substanzen ist bekannt. Jackson und Lee zählen in ihrem Review Artikel "Microencapsulation and the Food Industry" (Lebensm.-Wiss.u.-Technol. 24, 289-297 (1991)) eine ganze Reihe von geeigneten Überzugsmaterialien auf, darunter Fette, Wachse, Hydrokolloide, wie z.B. auch modifizierte Cellulosen, und Proteine.

In der WO 97/16078 wird ein Verfahren nur von Aroma- und Riechstoffen beschrieben, die von einer Schutzhaut umhüllt sein können. Als mögliche Umhüllung wird u.a. auch modifizierte Cellulose genannt. Die Granulate selbst sind inhomogen und enthalten ein Trägermaterial und ein in ein filmbildendens Agens eingeschlossenes Aroma. Ziel dieser Anmeldung ist die Herstellung eines möglichst staubfreien Granulats. Die so erhaltenen Teilchen weisen eine unregelmäßige Form und ein nicht steuerbares Abgabeverhalten der Inhaltsstoffe auf.

Eine Herabsetzung der Freisetzungsgeschwindigkeit von eingekapselten Aromen mit hydrophiler Matrix in wässrigen Systemen wird üblicherweise durch das Aufbringen von Überzügen aus hydrophoben Substanzen wie z.B. Fetten oder Wachsen sowie auch aus gelbildenden Proteinen oder Hydrokolloiden erreicht. Für klare wässrige Lebensmittel sind Fette oder Wachse jedoch nicht geeignet, da sich bei ihrer Verwendung optisch inakzeptable Abscheidungen im Lebensmittel bilden.

Hydrokolloidgele sind zwar hydrophil, d.h. sie sind in wässgen Systemen kolloidal löslich, die Hydratisierung und Löslichkeit des Gels steigt bei vielen dieser Systeme jedoch mit zunehmender Temperatur konstant an. Der Aromaschutz ist dann gerade bei hohen Temperaturen am geringsten.

Bestimmte modifizierte Cellulosen hingegen zeichnen sich durch eine in der Gruppe der Hydrokolloide einzigartige reversible Bildung eines festen Gels in Wasser bei erhöhten Temperaturen aus. Die Viskosität dieser Gele steigt bei hohen Temperaturen stark an (oberhalb des stoffspezifischen Flockpunktes, d.h. der Temperatur, ab der feste, hochviskose Gele gebildet werden) und nimmt dann beim Abkühlen wieder ab. Die Reversibilität der Gelbildung hebt die modifizierten Cellulosen auch deutlich gegenüber dem Verhalten von Proteingelen ab, die zwar auch bei hoher Temperatur gelieren können, deren Gele beim Abkühlen aber nicht wieder in Lösung gehen.

Dieses im Vergleich zu anderen Gelsystemen inverse Viskositäts- und Temperaturverhalten oberhalb des Flockpunktes und die Reversibilität der Gelbildung von bestimmten modifizierten Cellulosen wird im angelsächsischen Sprachgebrauch als "reversible thermal gelation" bezeichnet. (Edible Films and Coatings: A Review, Food Technology, December 1986, 47- 59)

Die Ausnutzung der reversiblen Thermogelierung von Methylcellulose oder Hydroxypropylcellulose bei der Verwendung als Schutzmatrix für temperaturempfindliche Substanzen ist an sich bekannt.

In der WO 92/11084 wird Methylcellulose in einer Kapselmatrix für den Süssstoff Aspartam verwendet, der in wasserhaltigen Medien bei hohen Temperaturen instabil ist. Damit kann die Stabilität des Süßstoffs in Backwaren gesteigert werden.

EP-A-0 170 752 beschreibt die Umhüllung von Aromen- und Riechstoffpartikeln, die durch feuchte Granulierung und anschließende Trocknung hergestellt werden mit modifizierter Cellulose.

In der WO 98/49910 wird die Verkapselung von Nahrungsmitteln und anderen Materialien beschrieben, wobei diese Materialien als erstes mit einem hydrophoben Film und dann mit einer Schicht umhüllt werden, die ein von der Temperatur abhängiges reversibles Lösungverhalten aufweist Diese Schicht kann aus Cellulose-Derivaten oder anderen Polymeren bestehen. Der innere hydrophobe Film besteht beispielsweise aus Fetten, Paraffin oder Wasser. Es ist auch möglich, dass um die polymere Schicht mit reversiblem Lösungsverhalten noch eine äußere hydrophobe Schicht gelegt wird. Das verkapselte Material kann unterschiedlich groß sein und aus dem Nahrungsmittel selbst oder in Tablettenform vorliegen. Die innere Schicht kann auch in dem verkapselten Material enthalten sein (Hybridsystem). Nachteilig an diesem System ist die hydrophobe Schicht, die sich im wässgen System in unerwünschter Weise auf der Oberfläche abscheidet.

Aufgabe der vorliegenden Erfindung war es, bei der Herstellung von aromatisierten, wasserhaltigen Lebensmitteln, die einen Erhitzungsprozess durchlaufen, die Aromafreisetzung effektiv zu regeln. Die Freisetzungsrate in der Abkühlphase sollte gezielt zeit- und temperaturabhängig steuerbar sein bis hin zur vollständigen Kaltwasserlöslichkeit. Ferner sollten die Freisetzungsraten für verschiedene Aromakomponenten annähernd gleich sein, um eine unerwünschte Verschiebung des Geschmacksprofils zu verhindern. Durch Verzögerung der Freisetzung bei hohen Temperaturen sollten Aromaverluste verringert werden.

Es wurden eingekapselte Aromen und/oder Riechstoffe gefunden, die dadurch gekennzeichnet sind, dass sie aus durch Wirbelschichtsprühgranulation hergestellten hydrophilen festen Partikeln bestehen, in denen die Aromen und/oder Riechstoffe einschlossen sind, und die mit modifizierter Cellulose umhüllt sind oder sie enthalten, wobei diese bei Temperaturerhöhung eine reversible Gelbildung aufweist.

Der erfindungsgemäße Nutzung bestimmter modifizierter Cellulosen zum Schutz und zur invers temperatur-/ zeitgesteuerten Freisetzung von eingekapselten Aromen und/oder Riechstoffen in heißen wässrigen Systemen war überraschend.

Die Cellulose für die erfindungsgemäß eingekapselten Aromen und/oder Riechstoffe bildet einen Film, der gerade bei hohen Temperaturen in wässrigen Medien eine hohe Viskosität hat und eine Diffusionssperre für Aromastoffe darstellt. Bei allmählicher anschließender Abkühlung weist die Cellulose-Gelschicht erhöhte Quellbarkeit, kontrollierbare Viskositätsabnahme bis zur vollständigen rückstandsfreien Löslichkeit auf. Das Aroma kann dadurch zeit-/temperaturabhängig und linear freigesetzt werden. Die Funktionsweise des Überzugs (Verzögerungsrate) kann den jeweiligen Anwendungsanforderungen optimal angepasst werden.

Die modifizierte Cellulose bildet eine Umhüllung der Aroma- und/oder Riechstoffpartikel. Die Diffusion der Aroma- bzw. Riechstoffe durch die Hüllschicht und damit deren Freisetzung kann über die Wahl der Cellulose mit dem spezifischen Flockpunkt sowie über die Dicke der Hüllschicht gesteuert werden.

Die erfindungsgemäßen verkapselten Aromen und/oder Riechstoffe können 1 bis 50 Gew.-%, vorzugsweise 2 bis 20 Gew.-%, besonders bevorzugt 5 bis 10 Gew.-%, modifizierte Cellulose enthalten. Die jeweilige Cellulosemenge bestimmt die Schichtdicke und steuert die Freisetzungsraten für die Aromen und/oder Riechstoffe, wobei die Freisetzung um so langsamer stattfindet, je höher der Celluloseanteil ist.

Unter modifizierten Cellulosen für die erfindungsgemäßen verkapselten Aromaund/oder Riechstoffe werden modifizierte Cellulosen verstanden, die thermoreversible Gele bilden können. Besonders bevorzugt sind hier Methylcellulose, Hydroxypropylcellulose, Hydroxypropylmethylcellulose, Ethylmethylcellulose, Ethylcellulose oder Gemische hiervon.

Nicht mit allen Substanzen, die unter dem Begriff "modifizierte Cellulosen" zusammengefasst werden, können thermoreversible Gele gebildet werden. Gele anderer als der erfindungsgemäßen "modifizierten Cellulosen" wie z.B. die Carboxymethylcellulose verhalten sich nicht in der gewünschten Weise.

Hydrophile Aroma- und/oder Riechstoffpartikel setzen sich aus einer Aromaund/oder einer Riechstoffmischung und einem an sich bekannten hydrophilen Träger (beispielsweise Gummi-Arabicum oder Dextrine, wie Maltodextrin) zusammen.

Es ist auch möglich, weitere Substanzen, wie z.B. Vitamine, Mikroorganismen, Genusssäuren oder Farbstoffe, zuzusetzen.

Für die vorliegende Erfindung ist es wesentlich, dass keine weiteren Schichten zum Schutz des Kerns erforderlich sind.

Die Erfindung betrifft auch ein Verfahren zur Herstellung von eingekapselten Aromen und/oder Riechstoffen, bei welchem die Aroma- und/oder Riechstoffpartikel mit einem Überzug versehen werden. Dieses Verfahren ist dadurch gekennzeichnet, dass der Überzug eine modifizierte Cellulose enthält, bei welcher unter Temperaturerhöhung reversibel eine Gelbildung eintritt.

Durch das erfindungsgemäße Herstellungsverfahren erhält man eingekapselte Aromen und/oder Riechstoffe der oben beschriebenen Art mit den dort genannten Vorteilen. Diese verkapselten Aromen und/oder Riechstoffe können nach ihrer Fertigstellung 1 bis 50 Gew.-%, vorzugsweise 2 bis 20 Gew.-%, besonders bevorzugt 5 bis 10 Gew.-% modifizierte Cellulose enthalten. Als modifizierte Cellulose seien insbesondere Methylcellulose, Hydroxypropylcellulose, Hydroxypropylmethylcellulose, Ethylmethylcellulose, Ethylcellulose oder Gemische genannt.

Die Aroma- und/oder Riechstoffpartikel, die als Kern dienen werden durch Wirbelschichtsprühgranulation hergestellt. Die Herstellung dieser Kerne ist an sich bekannt.

Die Partikel haben einen Durchmesser von 10 bis 5000µm bevorzugt 200 bis 2000µm.

Die EP 070 719 beschreibt die Herstellung von Aroma- und/oder Riechstoffpartikeln in einer diskontinuierlich betriebenen Wirbelschicht. Dabei wird eine wässrige Emulsion aus den zu granulierenden Aromen und/oder Riechstoffen und geeigneten Trägerstoffen in ein Wirbelbett gesprüht, welches aus mit Luft aufgewirbelten Partikeln besteht. Die Partikel wirken dann als Keime für die Bildung der Granulatkörper.

In EP 0 163 836 wird eine Apparatur zur Herstellung von Granulaten durch kontinuierlich betriebene Wirbelschicht beschrieben. Die Granulaterzeugung und das selektive Austragen bei Erreichen der gewünschten Korngröße erfolgt simultan und kontinuierlich.

In der WO 97/16078 wird die Herstellung von Aroma- und/oder Riechstoffpartikeln in einem diskontinuierlich betriebenen Fließbettrotorgranulator beschrieben. Durch eine rotierende Bodenplatte erzeugt der Rotorgranulator eine Verwirbelung des in ihm enthaltenen Fließbettes, so dass weniger Luft zu dessen Verwirbelung benötigt wird.

Erfindungsgemäß wird die kontinuierliche Herstellungweise der Partikel in einer Apparatur nach EP 0 163 836 bevorzugt.

Nach dem Schritt der Wirbelschichtsprühgranulation wird durch Aufsprühen einer Lösung, die Wasser und eine modifizierte Cellulose enthält, ein Überzugsfilm mit gleichmäßiger definierter Schichtdicke auf die Aroma- und/oder Riechstoffpartikel mit den darin eingekapselten Aromen bzw Riechstoffen aufgetragen. Dazu werden an sich bekannte Apparaturen, vorzugsweise Wirbelschichtapparaturen (Top-Spray-Coater, Bottom-Spray-Coater, Wurster-Coater), benutzt.

Als Lösungsmittel für die Sprühlösung können beispielsweise Wasser oder Wasser/Ethanolgemische dienen. Die genannten modifizierten Cellulosen werden in einer Konzentration zwischen 0 % und 25 %, bevorzugt zwischen 1 % und 15 %, in der Sprühlösung angesetzt. Vorzugsweise werden für das Aufbringen von Überzügen modifizierte Cellulosen mit einem Veretherungsgrad gewählt, die der Sprühlösung nur eine geringe Viskosität geben.

Die geeigneten Zuluft-Temperaturen beim Coaten in der Wirbelschicht sind zwischen 50°C und 140°C. Die geeigneten Abluft-Temperaturen beim Coaten in der Wirbelschicht sind zwischen 30°C und 100°C.

Die Schichtdicke beträgt 1 bis 200 µm, vorzugsweise 2 bis 100µm, insbesondere bevorzugt 5 bis 50 µm.

Die Schichtdicke wird eingestellt durch die Menge an aufgesprühter Coatinglösung.

Der Sprühlösung können anwendungsbezogen auch andere Substanzen bzw. Substanzgemische wie z.B. andere Hydrokolloide, Fette, Wachse, Zucker oder auch Weichmacher wie z.B. Polyethylenglykol oder auch übliche Zusatzstoffe, wie z.B. Lebensmittelfarbstoffe, zugegeben werden.

In einer alternativen Ausführungsform der vorliegenden Erfindung erfolgt die Umhüllung der Aroma- und/oder Riechstoffpartikel nicht durch eine einheitliche Hülle, sondern durch Durchdringen der Partikel mit der modifizierten Cellulose.

Als eingekapselte Substanzen kommen alle Aromen- und/oder Riechstoff-mischungen, die in der Industrie Anwendung finden, sowie auch einzelne Aroma- und/oder Riechstoffkomponenten in Frage.

Zur Erfindung gehört ferner ein Verfahren zur Anreicherung von Lebensmitteln mit Aromen oder zur Herstellung von parfümierten Bedarfsgegenständen, wie beispielsweise Waschmittel. Dieses Verfahren ist dadurch gekennzeichnet, dass den Lebensmitteln oder den Bedarfsgegenständen die oben beschriebenen eingekapselten Aromen und/oder Riechstoffe zugegeben werden.

Beispielsweise seien genannt: Aufgussbeuteltee, Instantsoßenpulver, Fertigsoße, pasteurisierte Getränke, Kaubonbons, Waffeln,Waschmittel.

Vorzugsweise werden die Lebensmittel bei oder nach der Zugabe der erfindungsgemäßen verkapselten Aroma- und/oder Riechstoffe auf eine Temperatur über dem Flockpunkt der modifizierten Cellulose erhitzt und dann abgekühlt.

Durch das besondere Freisetzungsverhalten der erfindungsgemäßen Aromen können neue Qualitäten der Lebensmittel erzielt werden. So ist beispielsweise eine Erhitzung möglich, ohne dass ein zu starker Aromenverlust eintritt. Beim Abkühlen der Lebensmittel tritt umgekehrt die erwünschte und definierte Freisetzung der Aromen ein, die in ihrem Zeitverlauf durch die Art der Verkapselung gesteuert werden kann. Da die verschiedenen Einzelaromakomponenten mit der gleichen Rate freigesetzt werden, und ihr Mengenverhältnis zueinander daher konstant bleibt, treten auch keine unerwünschten Verschiebungen des Aromaprofils ein.

### Beispiele

Im folgenden wird die Erfindung anhand von Ausführungsbeispielen mit zugehörigen Figuren näher erläutert.

Figur 1 zeigt die Aromenfreisetzung eingekapselter Aromen mit und ohne Überzug aus modifizierter Cellulose.

Figur 2 zeigt die Freisetzung verschiedener Aromakomponenten.

### Beispiel 1

### Herstellung von Kapseln mit einer Freisetzungsrate von 50% pro Minute bei Temperaturen über 60°C

Es wird eine Lösung aus 2,0 Gew. % niedrig viskoser Methylcellulose (Viskosität einer 2 %igen wässgen Lösung bei 20°C: 400 mPas (cP) in Wasser hergestellt. Der Flockpunkt dieser Methylcellulose liegt über 50°C.

In einer Wirbelschichtapparatur des in EP 0 163 836 dargestellten Typs (mit den folgenden Merkmalen: Durchmesser Anströmboden: 225 mm, Sprühdüse: Zweistoffdüse, Sichtender Austrag: Zick-Zack-Sichter, Filter: internes Schlauchfilter) wurden Partikel, die ein eingekapseltes Modellaromengemisch (bestehend aus Ethylbutyrat : Limonen : Phenylethylalkohol, 1:1:1) enthalten, mit Methylcellulose überzogen. Durch Anheben der Sichtgasmenge auf 20 kg/h bei 30°C wird kein Material ausgetragen, d.h. das Coaten findet im Batchbetrieb statt. Dazu werden als Bettvorlage 480 g Aromapartikel vorgelegt. Die Methylcellulose-Lösung wird bei einer Temperatur von 22°C in den Wirbelschichtgranulator gesprüht. Die Temperatur des Zerstäubungsgases beträgt 30°C. Zur Fluidisierung des Bettinhaltes wird Stickstoff in einer Menge von 120 kg/h eingeblasen. Die Eintrittstemperatur des Fluidisiergases beträgt 140°C. Die Temperatur des Abgases beträgt 81°C. Man erhält ein frei fließendes Granulat. Die Feststoffpartikel sind rund. Die dünne, sehr gleichmäßige Methylcellulose-Beschichtung beträgt 5 Gew.% bezogen auf das Granulatgewicht.

### Beispiel 2

### Herstellung von Kapseln mit einer Freisetzungsrate von 10% pro Minute bei Temperaturen über 60°C

Es wird eine Lösung aus 2,0 Gew. % einer niedrig viskosen Methylcellulose (Viskosität einer 2% igen wässgen Lösung bei 20°C: 400 mPas (cP) in Wasser hergestellt. Der Flockpunkt dieser Methylcellulose liegt über 50°C.

Das Aufbringen eines Überzuges von Methylcellulose auf Aromapartikel, die ein eingekapseltes Modellaromengemisch (bestehend aus Ethylbutyrat: Limonen : Phenylethylalkohol, 1:1:1) enthalten, erfolgt wie in Beispiel 1 es wird jedoch doppelt so viel Umhüllung aufgetragen. Dazu muss entsprechend länger beschichtet werden.

Die Methylcellulose-Beschichtung beträgt 10 Gew.% bezogen auf das Granulat-gewicht.

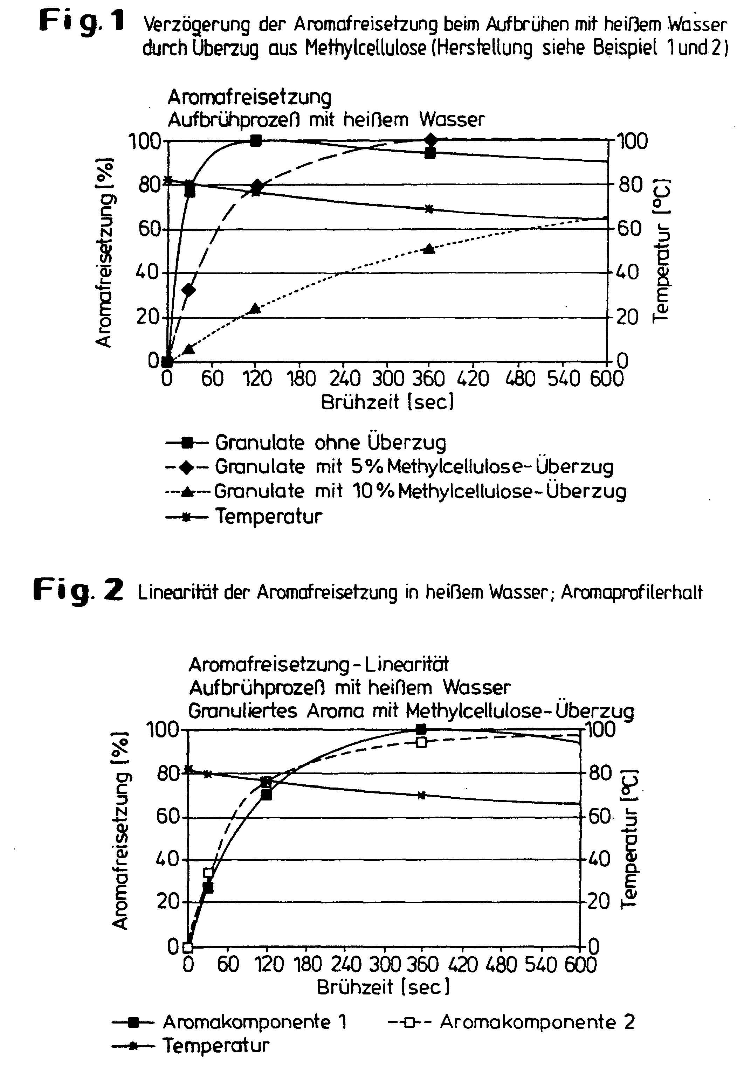

Die Funktionsweise des Überzugsmaterials wird durch die Diagramme in den Figuren 1 und 2 erläutert Figur 1 zeigt die Verzögerung der Aromenfreisetzung beim Aufbrühen mit heißem (kochendem) Wasser durch Überzug aus Methylcellulose (Herstellung der eingekapselten Aromen gemäß Beispiele 1 und 2).

Die Zeitachse auf der Abszisse erstreckt sich von 0 bis 600 Sekunden. Auf der linken Ordinate ist der Prozentsatz des freigesetzten Aromas (von 0 bis 100 %) aufgetragen, auf der rechten Ordinate kann die jeweilige Prozesstemperatur (von 0°C bis 100°C) über die dazugehörige abfallende Linie abgelesen werden.

Herkömmliche Aromapartikel ohne Umhüllung (durchgezogene, steil ansteigende Linie) zeigen eine schnelle Freisetzung der Aromen. Bereits nach einer Minute ist fast das gesamte Aroma freigesetzt.

Dagegen geben die erfindungsgemäßen eingekapselten Aromen ihren Inhalt bedeutend langsamer frei. Die Freisetzungsrate lässt sich dabei durch den Gehalt an Methylcellulose steuern. Sie ist bei einem Gehalt von 10% Methylcellulose (gepunktete Kurve) wesentlich geringer als bei einem Gehalt von 5 % Methylcellulose (gestrichelte Kurve).

Figur 2 zeigt für denselben Prozess die Freisetzungskurven für zwei verschiedene Aromenkomponenten (gepunktete und durchgezogene Linien). Diese verlaufen annähernd deckungsgleich. D.h., dass die Komponenten mit der gleichen Rate freigesetzt werden, so dass eine unerwünschte Verschiebung des Geschmacksprofils nicht eintritt.

### Beispiel 3

### Herstellung von Kapseln mit Erdbeeraroma

Es wird eine Lösung aus 2,0 Gew. % einer niedrig viskosen Methylcellulose (Viskosität einer 2% igen wässgen Lösung bei 20°C: 400 mPas (cP) in Wasser hergestellt. Der Flockpunkt dieser Methylcellulose liegt über 50°C.

Das Aufbringen eines Überzuges von Methylcellulose auf Aromapartikel, die ein eingekapseltes Erdbeeraroma enthalten, erfolgt in einer Wirbelschichtapparatur vom Typ GPCG 3 der Firma Glatt mit den folgenden Merkmalen:
Durchmesser Anströmboden : 150 mm,
Sprühdüse : Zweistoffdüse,
Filter : internes Schlauchfilter,
Eintrittstemperatur des Fluidisiergases : 100°C,
Ablufttemperatur: 60°C,
Zerstäubergastemperatur: 22°C,
Fluidisiergasmenge: 50 kg/h.

Die Methylcellulose-Beschichtung beträgt 10 Gew.% bezogen auf das Granulat-gewicht.

### 4. Anwendungsbeispiele

### 4.1. Tee in Aufgussbeuteln

Zu Tee in Beuteln werden Aromapartikel mit darin eingekapseltem Erdbeeraroma, die mit Methylcellulose-Überzug versehen sind, sowie Aromapartikel ohne Methylcellulose-Überzug, die das gleiche Erdbeeraroma enthalten, zugegeben.

### Vorteile :

Nach Aufguss der aromatisierten Teebeutel erhält man
- sowohl einen starken sofortigen Aromaimpact, der geruchlich (orthonasal) und geschmacklich (retronasal) wahrgenommen wird,
- als auch eine gleichbleibende, von der Brühzeit unabhängige Aromatisierung (Intensität, Aromaprofil) des Getränks über eine Brühzeit von mehreren Minuten.

Die Verluste, die beim Aufgießen mit kochendem Wasser durch den Übergang der aus den ungecoateten Aromapartikel freigesetzten Aromastoffe in den Wasserdampf auftreten, werden sukzessive bei fortschreitendem Abkühlen des Tees durch all-mähliche und lineare Freisetzung des Aromas aus den gecoateten Aroma- oder Riechstoffpartikeln ausgeglichen.

### 4.2. Instant-Soße

Ein Instant-Soßenpulver wird mit Weißwein-Aromagranulaten, die mit Methylcellulose überzogen sind, aromatisiert. Bei der Zubereitung wird die Soße mit Wasser im Topf mindestens 5 Minuten auf über Kochtemperatur erhitzt.

### Vorteile :

Der Verlust flüchtiger Aromakomponenten während des Erhitzens wird reduziert. Volle Aromawirkung beim Verzehr.

### 4.3. Fertigsoße

Eine Nudelsoße wird mit Tomaten-Aromapartikeln, die mit Methylcellulose überzogen sind, aromatisiert. Zu Konservierungszwecken wird die Soße für 10 Minuten auf 80°C bis 100°C erhitzt und anschließend in der verschlossenen Verpackung abgekühlt.

### Vorteile :

Der Verlust flüchtiger Aromakomponenten während des Erhitzens wird reduziert. Die vollständige Aromafreisetzung erfolgt erst beim Abkühlen der Soße im geschlossenen Gefäß.

### 4.4. Pasteurisiertes Getränk

Während dem Hitzebehandlungsschritt im Herstellungsprozess eines Erfrischungsgetränkes zur Haltbarmachung wird ein Granulat mit eingekapseltem Ethylbutyrat zudosiert, das mit einem Film aus Methylcellulose überzogen ist.

### Vorteile:

Verbesserung des Aromaprofils durch Schutz des flüchtigen Ethylbutyrats beim Erhitzungsschritt und anschließende vollständige Freisetzung des Ethylbutyrats beim Abkühlprozess im geschlossenen Gefäß. Der Überzug hinterlässt keinen Rückstand im Endgetränk.

### 4.5. Kaubonbon

Ein rot gefärbtes Aromagranulat mit darin eingekapseltem Himbeer-Aroma und Methylcellulose-Überzug wird vor dem Formen zu 1 % in die heiße (120°C) Kaubonbonmasse, die Saccharose, Wasser, Glucosesirup, Fett, Fondant, Gelatine, Zitronensäure und einen Emulgator enthält, dosiert. anschließend abgekühlt und belüftet.

Vorteile :
- Die Granulate lösen sich während des Herstellungsprozesses nicht auf, so dass ein optischer Effekt durch die auffälligen Granulate im Endprodukt realisiert werden kann.
- Es treten geringe Aromaverluste beim Verarbeitungsprozess auf

Das Aroma ist an wenigen Stellen lokalisiert in der Matrix vorhanden und migriert nicht. Dadurch wird ein besonderer sensorischer Effekt erreicht (Hot Spots). Die umgebende Kaubonbonmasse kann mit einem anderen flüssigen Aroma aromatisiert werden, womit ein sensorischer Doppeleffekt erzielt werden kann.

### 4.6. Waschmittel

Ein Granulat, das eine eingekapselte Riechstoffkombination (Maiglöckchen-Note) enthält, und das mit einem Überzug aus modifizierter Cellulose versehen ist, wird zur Parfümierung von Waschpulver eingesetzt.

### Vorteil:

Die Parfümdosierung im Waschmittel kann reduziert werden. Der Verlust der Parfümierung beim Wäschewaschen durch Ausschwemmen mit dem Waschwasser wird minimiert, da die Aromapartikel an der Wäschefaser haften. Das eingekapselte Parfüm wird insbesondere bei hohen Waschtemperaturen geschützt.

### 4.7 Eiswaffel

Ein gelb gefärbtes Aromagranulat mit darin eingekapseltem Citronen-Aroma und 5 %igem Methylcellulose-Überzug wird mit einer Dosierung von 2 Gew.% in eine Teigmasse zur Fertigung von Eiswaffeln gegeben. Diese Teigmasse besteht aus Wasser (45 %), Weizenmehl (35 %), Saccharose (15 %), Erdnussöl, Lecithin, Salz. Der Teig mit den Aromagranulaten wird anschließend auf einem 250°C heißen Waffeleisen dünn ausgegossen und 1,5 Minuten lang ausgebacken. Danach werden die Waffeln zu Hörnchen aufgerollt.

### Vorteile gegenüber ungecoatetem Aromagranulat:

Die Aromagranulate bleiben während des Backprozesses erhalten und es treten nur geringe Verluste des eingekapselten flüchtigen Citronenaromas auf. Das Aroma wird erst beim Verzehr mechanisch durch Kauen freigesetzt.

Durch die Lokalisierung des Aromas an einzelnen Stellen in der Waffel kann ein besonderer sensorischer Effekt erzielt werden.

Durch den Erhalt der auffällig gefärbten Granulate kann ein optischer Effekt erreicht werden.

## Patentansprüche

1. Aus hydrophilen festen Partikeln bestehende eingekapselte Aromen und/oder Riechstoffe, **dadurch gekennzeichnet, dass** die Partikel durch Wirbelschichtsprühgranulation hergestellt werden und mit einer modifizierten Cellulose, die bei Temperaturerhöhung eine reversible Gelbildung aufweist, umhüllt sind.

2. Aromen und/oder Riechstoffe nach Anspruch 1, **dadurch gekennzeichnet, dass** es sich bei der modifizierten Cellulose um Methylceltulose, Hydroxypropylcellulose, Hydroxypropylmethylcellulose, Ethylmethylcellulose, Ethylcellulose oder Gemische hiervon handelt.

3. Aromen und/oder Riechstoffe nach Anspruch 1 oder 2, dadurch gekennzeichet, dass es sich bei der modifizierten Cellulose um Methylcellulose handelt

4. Aromen und/oder Riechstoffe nach Anspruch 1, **dadurch gekennzeichnet, dass** sie 1 bis 50 Gew.-% modifizierte Cellulose enthalten.

5. Aromen und/oder Riechstoffe nach Anspruch 1, **dadurch gekennzeichnet, dass** sie 2 bis 20 Gew.-% modifizierte Cellulose enthalten.

6. Aromen und/oder Riechstoffe nach Anspruch 1, **dadurch gekennzeichnet, dass** sie 5 bis 10 Gew.-% modifizierte Cellulose enthalten.

7. Verfahren zur Herstellung von eingekapselten Aromen und/oder Riechstoffen, bei welchem durch Wirbelschichtsprühgranulation hergestellte Aroma- oder Riechstoffpartikel mit einem Überzug versehen oder versetzt werden, **dadurch gekennzeichnet, dass** eine modifizierte Cellulose, die bei Temperaturerhöhung eine reversible Gelbildung aufweist, verwendet wird.

8. Verfahren nach Anspruch 7, **dadurch gekennzeichnet, dass** die Aromaund/oder Riechstoffpartikel durch Wirbelschichtsprühgranulation einer wässrigen Emulsion aus Aroma und/oder Riechstoffen und hydrophilen Trägem hergestellt werden.

9. Verfahren nach Anspruch 7 und 8, **dadurch gekennzeichnet, dass** die Beschichtung der Aroma und/oder Riechstoffpartikel in einer Wirbelschichtapparatur erfolgt.

10. Verfahren nach Anspruch 7 bis 9, **dadurch gekennzeichnet, dass** die Aroma und/oder Riechstoffpartikel mit einer modifizierten Cellulose versetzt werden.

11. Verfahren zur Anreicherung von Lebensmitteln mit Aromen und/oder Riechstoffen, **dadurch gekennzeichnet, dass** den Lebensmitteln eingekapselte Aromen und/oder Riechstoffe nach einem der Ansprüche 1 bis 6 zugegeben werden.

12. Verfahren nach Anspruch 11, **dadurch gekennzeichnet, dass** die Lebensmittel bei oder nach Zugabe der eingekapselten Aromen und/oder Riechstoffe auf Temperaturen über dem Flockpunkt der modifizierten Cellulose erhitzt werden.

13. Verwendung der eingekapselten Aromen und/oder Riechstoffe nach einem der Ansprüche 1 bis 6 zur Herstellung von Lebensmitteln oder Bedarfsgegenständen.

14. Verwendung nach Anspruch 13 zur Herstellung von Teeaufgussbeuteln.

15. Verwendung nach Anspruch 13 zur Herstellung von Instantsoßenpulvern.

16. Verwendung nach Anspruch 13 zur Herstellung von Fertigsoßen.

17. Verwendung nach Anspruch 13 zur Herstellung von pasteurisierten Getränken.

18. Verwendung nach Anspruch 13 zur Herstellung von Kaubonbons.

19. Verwendung nach Anspruch 13 zur Herstellung von Waschmitteln.

20. Verwendung nach Anspruch 13 zur Herstellung von Waffeln.

## Claims

1. Encapsulated aromas and/or odoriferous substances, **characterised in that** the particles are produced by fluidised bed spray granulation and are coated with a modified cellulose which exhibits reversible gel formation at elevated temperatures.

2. Aromas and/or odoriferous substances according to claim 1, **characterised in that** the modified cellulose is methyl cellulose, hydroxypropyl cellulose, hydroxypropyl methyl cellulose, ethyl methyl cellulose, ethyl cellulose or mixtures thereof.

3. Aromas and/or odoriferous substances according to claim 1 or 2, **characterised in that** the modified cellulose is methyl cellulose.

4. Aromas and/or odoriferous substances according to claim 1, **characterised in that** they contain 1 to 50 % by weight modified cellulose.

5. Aromas and/or odoriferous substances according to claim 1, **characterised in that** they contain 2 to 20 % by weight modified cellulose.

6. Aromas and/or odoriferous substances according to claim 1, **characterised in that** they contain 5 to 10 % by weight modified cellulose.

7. Method for producing encapsulated aromas and/or odoriferous substances, wherein aromatic or odoriferous substance particles produced by fluidised bed spray granulation are provided or mixed with a coating, **characterised in that** a modified cellulose exhibiting reversible gel formation at elevated temperatures is used.

8. Method according to claim 7, **characterised in that** the aromatic and/or odoriferous substance particles are produced by fluidised bed spray granulation of an aqueous emulsion consisting of aromatic and/or odoriferous substances and hydrophilic carriers.

9. Method according to claims 7 and 8, **characterised in that** the coating of the aromatic and/or odoriferous substance particles takes place in a fluidised bed apparatus.

10. Method according to claims 7 to 9, **characterised in that** the aromatic and/or odoriferous substance particles are mixed with a modified cellulose.

11. Method for the enrichment of foods with aromas and/or odoriferous substances, **characterised in that** the aromatic and/or odoriferous substances encapsulated in the foods are added according to any of claims I to 6.

12. Method according to claim 11, **characterised in that**, when or after the encapsulated aromas and/or odoriferous substances are added, the foods are heated to temperatures above the flocculation point of modified cellulose

13. Use of the encapsulated aromas and/or odoriferous substances according to any of claims 1 to 6 for producing foods or commodities.

14. Use according to claim 13 for producing tea bags.

15. Use according to claim 13 for producing instant sauce powders.

16. Use according to claim 13 for producing ready-made sauces.

17. Use according to claim 13 for producing pasteurised beverages.

18. Use according to claim 13 for producing chewy sweets.

19. Use according to claim 13 for producing detergents.

20. Use according to claim 13 for producing waffles.

## Revendications

1. Arômes et/ou parfums encapsulés consistant en particules solides hydrophiles, **caractérisés en ce que** les particules sont préparées par granulation par pulvérisation en couche tourbillonnaire et sont enrobées par une cellulose modifiée qui, lorsque la température augmente, subit une formation de gel réversible.

2. Arômes et/ou parfums selon la revendication 1, **caractérisés en ce que** la cellulose modifiée consiste en méthylcellulose, hydroxypropylcellulose, hydroxypropylméthylcellulose, éthylméthylcellulose, éthylcellulose ou leurs mélanges.

3. Arômes et/ou parfums selon la revendication 1 ou 2, **caractérisés en ce que** la cellulose modifiée est une méthylcellulose.

4. Arômes et/ou parfums selon revendication 1, **caractérisés en ce qu'**ils contiennent de 1 à 50 % en poids de cellulose modifiée.

5. Arômes et/ou parfums selon revendication 1, **caractérisés en ce qu'**ils contiennent de 2 à 20 % en poids de cellulose modifiée.

6. Arômes et/ou parfums selon revendication 1, **caractérisés en ce qu'**ils contiennent de 5 à 10 % en poids de cellulose modifiée.

7. Procédé pour la préparation d'arômes et/ou parfums encapsulés dans lequel des particules d'arôme ou de parfum préparées par granulation par pulvérisation en couche tourbillonnaire sont pourvues
ou additionnées d'un revêtement, **caractérisé en ce que** l'on utilise une cellulose modifiée subissant une formation de gel réversible lorsque la température augmente.

8. Procédé selon la revendication 7, **caractérisé en ce que** les particules d'arôme et/ou de parfum sont préparées par granulation par pulvérisation en couche tourbillonnaire d'une émulsion aqueuse d'arôme et/ou de parfum et de véhicules hydrophiles.

9. Procédé selon les revendications 7 et 8, **caractérisé en ce que** le revêtement des particules d'arôme et/ou de parfum est réalisé dans un appareil à couche tourbillonnaire.

10. Procédé selon les revendications 7 à 9, **caractérisé en ce que** les particules d'arôme et/ou de parfum sont additionnées d'une cellulose modifiée.

11. Procédé pour aromatiser et/ou parfumer des produits alimentaires, **caractérisé en ce que** l'on ajoute aux produits alimentaires des arômes et/ou parfums encapsulés selon l'une des revendications 1 à 6.

12. Procédé selon la revendication 11 **caractérisé en ce que**, à l'addition des arômes et/ou parfums encapsulés ou après cette addition; les produits alimentaires sont chauffés à des températures supérieures au point de floculation de la cellulose modifiée.

13. Utilisation des arômes et/ou parfums encapsulés selon l'une des revendications 1 à 6 pour la préparation de produits alimentaires ou de produits de consommation.

14. Utilisation selon la revendication 13 pour la préparation de thé en sachets à infuser.

15. Utilisation selon la revendication 13 pour la préparation de poudres de sauces instantanées.

16. Utilisation selon la revendication 13 pour la préparation de sauces prêtes à l'emploi.

17. Utilisation selon la revendication 13 pour la préparation de boissons pasteurisées.

18. Utilisation selon la revendication 13 pour la préparation de bonbons à mâcher.

19. Utilisation selon la revendication 13 pour la préparation de produits de lavage.

20. Utilisation selon la revendication 13 pour la préparation de gaufres.
